Europäisches Patentamt

**(19)** European Patent Office

Office européen des brevets

(11) Publication number: **0 052 084**
**A1**

## (12) EUROPEAN PATENT APPLICATION

(21) Application number: **81830196.2**

(22) Date of filing: **16.10.81**

(51) Int. Cl.³: **B 23 D 25/12**

(30) Priority: **11.11.80 IT 8346280**

(43) Date of publication of application: **19.05.82**
**Bulletin 82/20**

(84) Designated Contracting States: **AT BE CH DE FR GB LI
LU NL SE**

(71) Applicant: **DANIELI & C. OFFICINE MECCANICHE
S.p.A., Via Nazionale, I-33042 BUTTRIO (IT)**

(72) Inventor: **Coccolo, Enzo, Lungo Isonzo Argentino,
I-34170 Gorizia (IT)**
Inventor: **Hagendorfer, Aldo, Via Gorizia, 18,
I-34072 Gradisca D'Isonzo (GO) (IT)**

(74) Representative: **Petraz, Gilberto, G.L.P. S.a.s. di Gilberto
Petraz P.le Cavedalis 6/2, I-33100 Udine (IT)**

(54) **Improvements to flying shears and flying shears thus improved.**

(57) This invention concerns improvements to flying shears, whereby the flying shears consist of rotating blade-holder means (21—121) which are drawn into movement by an electromechanical actuator system (12) and which cooperate with guide means (22) in shearing to a desired length billets, bars or other lengthwise structures of any desired form during movement thereof, with a pre-set frequency of operation, said improvements comprising at least one of the following means:
— oleodynamic means (30) which transmit motion,
— braking means (23) which cooperate with means (24) that re-position the blades (33).
The invention also concerns flying shears which adopt one of more of said improvements.

EP 0 052 084 A1

Description of the invention entitled:

"IMPROVEMENTS TO FLYING SHEARS AND FLYING SHEARS THUS IMPROVED"

in the name of DANIELI & C. OFF. MEC. S.p.A.

submitted on                    under No.

This invention concerns improvements to flying shears and flying shears thus improved.

In particular, the improvements according to this invention are applied to flying shears employed to obtain billets or bars of a pre-set length by means of truncation.

To be more specific, said improvements are adopted so as to bring about a transmission of motion and a braking of rotating parts by means of especially effective and very silent systems.

The improvements of this invention also enable the shearing blades to be re-positioned in an optimal position before each processing operation.

Improved flying shears are known which employ braking systems and clutch means of a pneumatic type. It is known that said systems and means work too noisily and are therefore physically damaging for the persons operating the flying shears or present in the surroundings thereof.

Moreover, the known flying shears do not make it possible to bring the shearing blades back to the desired posit

Gilberto Petraz

ion at the end of each cycle of shearing the billets or bars. Because of this, said billets or bars may not always be of the desired length.

Furthermore, it should be borne in mind that the shearing or truncating systems employed in flying shears need a strong cooling action owing to their particular method of working.

In this respect, cooling means for flying shears are envisaged in the known art which require a highly complex embodiment and considerable costs.

In particular, flying shears are produced of which the braking means and means for transmitting motion are located in decentralized positions.

Although such shears are effective for shearing the billets or bars, they are bulky and need very complex cooling systems owing to said decentralization of their component parts.

One purpose of this invention, therefore, is to embody improvements that enable the shortcomings and drawbacks comprised in the known art in the field of flying shears to be avoided.

Said improvements comprise braking means and means to transmit motion which are very silent and especially effective by virtue of the particular actuation system employed.

Moreover, the improvements of our invention comprise systems for the automatic re-positioning of the blades after each shearing.

In effect said operation is required since it may happen that the blades stop after each shearing in a position other than that pre-set, owing to the interaction between the inertia of the rotating bodies of the machine and the braking action.

If such a position were not corrected, the shearing of the next bar would be done at a wrong or, at any rate, at an undesired distance.

Another advantage of this invention lies in the fact that the fluid of the actuator system is the same as that used for lubricating and cooling the mechanisms such as, for instance, shafts, gear wheels, etc. which undergo stress.

A further advantage of this invention is the fact that the improvements adopted in it enable flying shears to be embodied with a compact structure that requires neither extra supports and protection nor complicated cooling circuits such as would take up greater space.

The invention is therefore displayed in improvements to flying shears, whereby the flying shears consist of blade-holding rotating means which are drawn into movement by an electromechanical actuator system and which cooperate with guide means in shearing to a desired length billets, bars or other lengthwise structures of any desired form during movement thereof, with a pre-set frequency of operation, said improvements being characterized by comprising:
- oleodynamic means for transmitting motion,
- and braking means which cooperate with means that re-position the blades.

The invention is also displayed in flying shears, whereby the flying shears consist of blade-holding rotating means which are drawn into movement by an electromechanical actuator system and which cooperate with guide means in shearing billets, bars or lengthwise structures of any desired form during movement thereof, with a pre-set frequency of operation, said flying shears being characterized by comprising at least one of the following means:
- oleodynamic means for transmitting motion
- and braking means which cooperate with means that re-position the blades.

Gilberto Pozzi

We shall give hereinafter, as a non-restrictive example, the description of a preferential embodiment of the invention and shall refer to the tables wherein: −

Fig.I    shows the outer structure of improved shears;

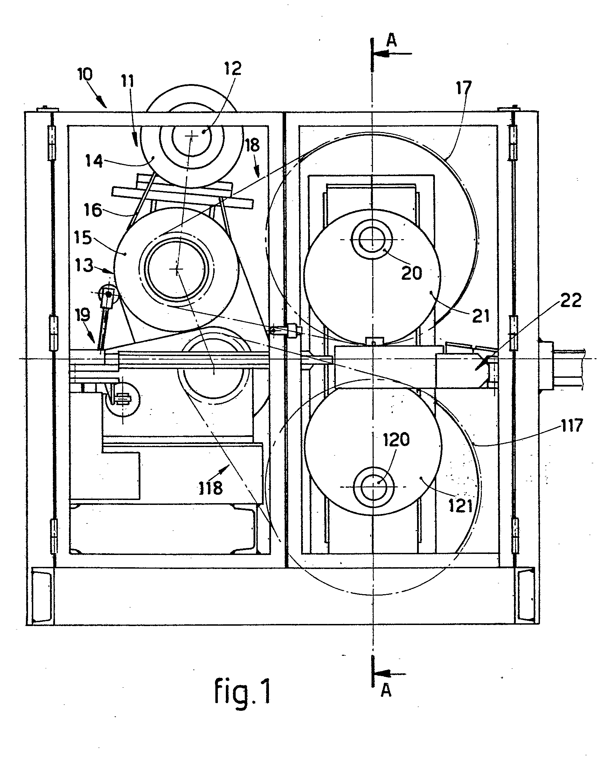

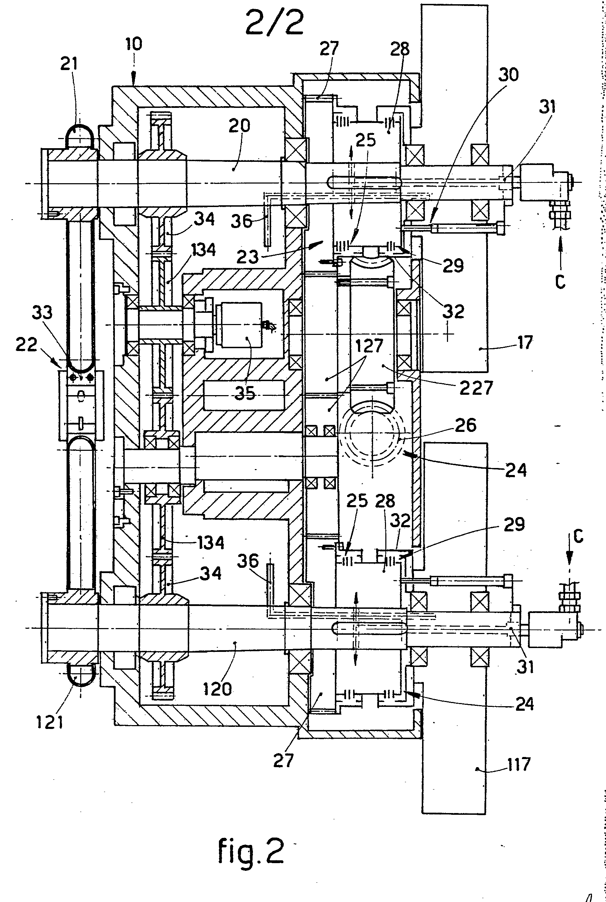

Fig.2    shows a section of a detail along the line A-A of the improved shears of Fig.I.

In the figures the same parts or parts able to perform the same functions bear the same reference numbers.

Fig.I shows flying shears made according to a preferential embodiment of the invention.

Said flying shears comprise a supporting protective structure IO able to hold the mechanical and electromechanical parts of said shears.

A drive group II is also included and consists of an electromechanical actuator system I2 able to draw into movement the wheelwork of a group that inverts motion I3.

Transmission of motion from the electric motor I2 to the group which inverts motion I3 is carried out by two pulleys I4-I5 connected together with a belt I6.

In particular, the pulley I4 is keyed to the shaft of the electric motor I2, whereas the pulley I5 cooperates with the wheelwork of the group which inverts motion I3.

The inverter group I3 in its turn transmits motion to two flywheels I7-II7 through suitable belt means I8-II8 respectively.

To obtain the right tensioning of said belt means I8-II8, suitable balance means I9 are employed which enable the motor I2 and the group which inverts motion I3 to be positioned suitably.

Blade-holding means 2I-I2I mounted on the shafts 20-I20 are also included, and said shafts 20-I20 cooperate coaxially with the flywheels I7-II7, as shown in Fig.2.

In the example shown said blade-holding means 2I-I2I

are conformed like an eccentric so as to be able to provide optimal service and, at the same time, to form a negligible inertial system.

Furthermore, said means 2I-I2I have to rotate in opposite directions so as to be able to shear the bars and billets.

The aforesaid group which inverts motion I3 is employed to obtain said opposite directions of rotation.

Fig.I also shows guide means 22 shaped channel-wise and able to transport the bars or billets continuously, firstly into the shearing zone and thereafter into the discharge zone of the flying shears.

Fig.2 shows a view of a section along the line A-A of a detail of Fig.I wherein the improvements of the invention are included.

When the shearing operation is required, the flywheels I7-II7 are set in motion beforehand and are made to work at the best operating speed.

Until the shearing has been carried out, said flywheels I7-II7 rotate freely around their respective shafts 20-I20.

Furthermore, during said working phase the shafts themselves 20-I20 can be kept clamped or can be made to rotate in the desired direction and at the desired speed by being acted upon with suitable braking means 23, which cooperate with means 24 that re-position the blades 23.

According to a preferential embodiment of this invention said braking means 23 comprise brakes 25 able, through a system of suitably conformed gear wheels 27-I27-227, to make the shafts 20-I20 and a worn screw 26 cooperate together.

Said cooperation can also be brought about with the help of other connecting means such as, for instance, pulleys, belts, transmissions, wedges or other means.

Thus it is possible for the shafts 20-I20 to be rotated in the desired direction and at the desired speed by acting

on the worm screw 26 so as to be able to position the blade-holding means 2I-I2I as desired before the shearing operation.

When the position of the blade-holders 2I-I2I has been regulated, the shafts 20-I20 remain clamped by the worm screw 26, which, owing to its irreversibility, behaves like a substantially rigid structure in respect of said shafts 20-I20.

So as to carry out the actual shearing operation itself, steps are taken to connect the flywheels I7-II7 to the shafts 20-I20, on which they were initially mounted in such a way as to be able to turn freely.

This connection is made by causing the entry of fluid under pressure into a chamber 28 where there are present the clutch elements 29 forming part of the oleodynamic means 30 transmitting motion, and the aforesaid brakes 25.

In particular, said fluid under pressure is injected (C) by known injection means, which have not been shown in Fig.2, into a delivery duct 3I machined partially within the shafts 20-I20 and opening out into the expansion chamber 28.

The fluid under pressure causes the brakes 25 to be unclamped and the clutch elements 29 to be engaged.

In this way the shafts 20-I20 are disconnected from the braking means 23 and means 24 re-positioning the blades 33 and are connected instead to rotating drums 32-I32 which are solidly fixed to the flywheels I7-II7.

In effect, when shearing is carried out, the flywheels I7-II7 are connected to the shafts 20-I20 in the way described so as to set in rotation the blade-holders 2I-I2I in which the respective blades 33-I33 are fitted.

After having carried out a rotation not greater than 360°, said blade-holders 2I-I2I enable the bar or billet passing through the guide means 22 to be sheared.

Gilberto Petraz

0052084

In particular, the shearing operation is ensured by the fact that the two blade-holders 2I-I2I have the same speed of rotation and the shearing blades 33-I33 occupy at all times counterpart positions in respect of the bar or billet to be sheared.

The fact that the blades 33-I33 occupy momentary counterpart positions is ensured owing to the use of a system of toothed wheels or gears 34-I34 which connect the two shafts 20-I20 together.

In this way, when said blades 33-I33 pass along inside the guide means 22, they come into contact with the moving bars and shear them.

In particular, the length of the sheared billets or bars is determined, provided that the speed of rotation of the flywheels I7-II7 remains unchanged, by the position of the blades 33-I33 before the shearing.

It is also possible for the bars to be sheared at differing distances by varying the speed of the flywheels I7-II7 in a pre-set manner and by keeping unvaried the position of the blades 33-I33 at the start of shearing.

The braking of the blade-holders 2I-I2I or of the shafts 20-I20 begins before the shearing is done.

This operation is carried out when a suitable transducer-converter 35 causes the discharge of pressure of the oleodynamic fluid through the ducts 3I after having read the momentary position of the start of braking of the blade-holders 2I-I2I.

The brakes 25 reconnect at once, through the system of gear wheels 27-I27-227, the shafts 20-I20 to the worm screw 26, which by virtue of its own irreversibility causes the braking of the blade-holders 2I-I2I.

Owing to the effect of the discharge of pressure of the fluid the clutch elements 29 are disengaged at the same time

*Gilberto Petraz*

so as to enable the flywheels I7-II7 to go on rotating freely around the shafts 20-I20.

It may happen that the halted position of the blades 33-I33 is different from the pre-set position owing to the interaction between the inertia of the rotating bodies of the machine and the braking action. In such a case the means 24 which re-position the blades 33 take action.

Said re-positioning means 24 comprise the transducer-converter 35, which is also able to decode references present on an element able to move in correlation with the blade-holders 2I-I2I or blades 33.

Said element may be one of the blade-holders 2I-I2I or a gear wheel 34 or I34 or a rotating element fitted to one of the shafts 20 or I20 or else rotating or cooperating therewith 20-I20.

In the example shown in Fig.2 said references are arranged on the gear wheel I34 and may consist, for instance, of suitably coded sectors of circumference.

The transducer-converter 35 reads the position of the blades at the start of shearing and compares it with the position reached by said blades at the end of shearing.

The algebraic difference between the two positions is decoded by the transducer-converter 35 and is converted thereby into a suitable signal, for instance, of an analogue or digital type able to govern respectively a geared motor or a step motor fitted to the shaft of the worm screw 26.

When a new series of shearings with a different dimension is required, it is necessary to proceed to position the blades 33-I33 anew.

So as to carry out this operation, suitable controlling signals are sent to the transducer-converter 35 through an appropriate keyboard or console.

Said transducer-converter 35 in its turn commands the

geared motor or step motor fitted to the shaft of the worm screw 26, in such a way as to actuate the positioning of the blades 33-I33.

Said positioning can also be carried out by acting by hand on the blade-holders 2I-I2I or on means connected thereto, but not before having taken steps to brake the shafts 20-I20 with the braking means 23.

The lubrication and cooling of the oleodynamic means transmitting motion 30 and of the braking means 23 are done advantageously by using the same fluid as that in the oleodynamic system.

Said fluid is introduced into an auxiliary duct 36 machined partially in the shafts 20-I20 separately from the aforesaid delivery duct 3I and is made to flow over the gear wheels of the oleodynamic means 30 transmitting motion.

The fluid runs over the wheels 27-I27-227 and over the worm screw 26 and in this way lubricates and cools them.

Lastly, the fluid is gathered suitably at the base of the braking means 23 and of the means 30 transmitting motion and is then re-cycled and re-injected into the ducts 3I-36.

We have described here a practical application of the improvements of the invention, but variants are possible. Thus the proportions and sizes can be varied and the blades 33-I33 can be positioned with manual means which cooperate directly with the worm screw 26. These and other variants are possible for a technician in this field without departing thereby from the scope of the idea of the solution of the invention.

## C L A I M S

I. Improvements to flying shears, whereby the flying shears consist of rotating blade-holder means (2I-I2I) which are drawn into movement by an electromechanical actuator system (I2) and which cooperate with guide means (22) in shearing to a desired length billets, bars or other length-wise structure of any desired form during movement thereof, with a pre-set frequency of operation, said improvements being characterized by comprising at least one of the following means:

- oleodynamic means to transmit motion (30),
- braking means (23) which cooperate with means (24) that re-position the blades (33).

2. Flying shears, whereby the flying shears consist of rotating blade-holder means (2I-I2I) which are drawn into movement by an electromechanical actuator system (I2) and which cooperate with guide means (22) in shearing billets, bars or lengthwise structures of any desired form during movement thereof, with a pre-set frequency of operation, said shears being characterized by comprising at least one of the following means:

- oleodynamic means (30) to transmit motion,
- braking means (23) which cooperate with means (24) that re-position the blades (33).

3. Flying shears as in Claim 2, characterized by the fact that the oleodynamic means (30) transmitting motion consist of:

- a carrying shaft (20) with a delivery duct (31),
- an expansion chamber (28)
- and clutch elements (29) cooperating with rotating drum means (32).

4. Flying shears as in Claim 2, characterized by the

Gilberto Petraz

0052084

fact that the braking means (23) consist of:

- a carrying shaft (20) with a delivery duct (31),
- an expansion chamber (28)
- and brakes (25) which cooperate with means (27-26) that are at least temporarily stationary.

5. Flying shears as in Claims 2 and 4, characterized by the fact that the means (24) which re-position the blades (33) consist of the means (27-26).

6. Flying shears as in Claims 2 and 4, characterized by the fact that the means (24) which re-position the blades (33) consist of the means (27-26), whereby the worm screw means (26) is connected to motor means which can be operated temporarily, and whereby transducer-converter means (35) are comprised which monitor and control the position of the blades (33) when the latter are halted. -

7. Flying shears as in Claims 2, 4, 5 and 6, characterized by the fact that the transducer-converter means (35) monitor and control the position of the blades (33) during the movement thereof and govern the braking action of the braking means (23).

8. Flying shears as in Claim 2 and in one or another of the Claims thereafter, characterized by the fact that the carrying shaft (20) comprises at least one auxiliary duct (36) that conveys cooling and lubricating fluid.

9. Improvements to flying shears and flying shears thus improved, as in one or another of the Claims hereinbefore and as described and shown and for the purposes allowed.

BAD ORIGINAL

Gilberto Pezraz

0052084

fig.1

*Gilberto Petraz*

0052084

fig.2

**European Patent Office**

**EUROPEAN SEARCH REPORT**

Application number

EP 81 83 0195

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | B 23 D 25/12 |
| X | <u>AU - B - 486 428</u> (HARDS) <br><br> * the whole document. * <br> --- | 1-3 | |
| X | <u>FR - A - 1 023 490</u> (CERENE) <br><br> * the whole document. * <br> --- | 1,5 | |
| X | <u>DE - B - 1 031 609</u> (SCHLOEMANN A.G.) <br><br> * the whole document * <br> --- | 1,2,5- 7 | **TECHNICAL FIELDS SEARCHED (Int.Cl. 3)** |
| X | <u>DE - A - 2 255 961</u> (DELANSON) <br><br> * the whole document * | 6 | B 26 D <br> B 23 G <br> B 27 L <br> B 23 D |
| | ----------- | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 18.02.1982 | BERGHMANS |

EPO Form 1503.1 06.78